(19) Europäisches Patentamt
European Patent Office
Office européen des brevets

(11) **EP 4 400 968 A1**

(12) **EUROPEAN PATENT APPLICATION**
published in accordance with Art. 153(4) EPC

(43) Date of publication:
**17.07.2024   Bulletin 2024/29**

(21) Application number: **22866701.0**

(22) Date of filing: **08.09.2022**

(51) International Patent Classification (IPC):
***G06F 9/50*** (2006.01)

(52) Cooperative Patent Classification (CPC):
**G06F 9/50**

(86) International application number:
**PCT/CN2022/117806**

(87) International publication number:
**WO 2023/036240 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **08.09.2021   CN 202111048559**

(71) Applicant: **ZTE Corporation
Shenzhen, Guangdong 518057 (CN)**

(72) Inventors:
• **CAO, Junsheng
Shenzhen, Guangdong 518057 (CN)**
• **GAO, Jie
Shenzhen, Guangdong 518057 (CN)**

(74) Representative: **Ipsilon
Le Centralis
63, avenue du Général Leclerc
92340 Bourg-la-Reine (FR)**

(54) **RESOURCE SCHEDULING METHOD AND APPARATUS, AND COMPUTER DEVICE AND READABLE MEDIUM**

(57)     Provided in the present disclosure is a resource scheduling method including: calculating first resource parameters of respective nodes and second resource parameters of respective resource users at the respective nodes; calculating resource utilization rates of the respective nodes according to the first resource parameters of the respective nodes; calculating a distribution parameter of the respective resource users according to the first resource parameters of the respective nodes and the second resource parameters of the respective resource users; in response to at least the resource utilization rates of the respective nodes or the distribution parameter of the respective resource users satisfying a resource aggregation condition, determining a resource user to be migrated and a target node, and changing a node, to which the resource user to be migrated belongs, to the target node. Further provided in the present disclosure are a resource scheduling apparatus, a computer device, and a readable medium.

FIG.2

EP 4 400 968 A1

**Description**

TECHNICAL FIELD

The present disclosure relates to the field of computing technologies, and particularly relates to the field of cloud resources.

BACKGROUND

In the applications of virtual machines or virtual machine clusters and so on, the main functions of resource management and scheduling include establishing and maintaining in real time running node resources of the system, heterogeneous features of resource objects and resource state management, providing state and scheduling management of interactive resources and resource objects, and processing scheduling request services of running node resources and object resources.

The cloud resource technology can implement virtualization and desktop migration of physical resources, realizing virtualization and basic resource management, allocation and use. In the existing art, general resource management and scheduling merely involve query and calculation, as well as allocation and use, of available resources, or rescheduling and migration for resource users exceeding a node load, aiming merely at maintaining resource availability and preventing the node from operating in an overloading state.

However, in the actual application process, resources for practical productions and applications are typically deployed in a multi-node or cluster manner, and the use of resource is dynamically changed, which can easily cause decentralized use of the node resources that leads to decentralized and irregular occupation and release of the node resources, resulting in a low resource utilization rate, waste of the node resources, and high use cost.

SUMMARY

The present disclosure provides a resource scheduling method and apparatus, a computer device, and a readable medium.

In a first aspect, an embodiment of the present disclosure provides a resource scheduling method, including: calculating first resource parameters of respective nodes and second resource parameters of respective resource users at the respective nodes; calculating resource utilization rates of the respective nodes according to the first resource parameters of the respective nodes; calculating a distribution parameter of the respective resource users according to the first resource parameters of the respective nodes and the second resource parameters of the respective resource users; and in response to at least the resource utilization rates of the respective nodes or the distribution parameter of the respective resource users satisfying a resource aggregation condition, determining a resource user to be migrated and a target node, and changing a node, to which the resource user to be migrated belongs, to the target node; wherein the resource user to be migrated is one or more of the respective resource users, and the target node is one or more of the respective nodes.

In another aspect, an embodiment of the present disclosure further provides a resource scheduling apparatus, including: a calculation module and a resource scheduling module, wherein the calculation module is configured to calculate first resource parameters of respective nodes and second resource parameters of respective resource users at the respective nodes; calculate resource utilization rates of the respective nodes according to the first resource parameters of the respective nodes; and calculate a distribution parameter of the respective resource users according to the first resource parameters of the respective nodes and the second resource parameters of the respective resource users; wherein the resource scheduling module is configured to, in response to at least the resource utilization rates of the respective nodes or the distribution parameter of the respective resource users satisfying a resource aggregation condition, determine a resource user to be migrated and a target node, and change a node, to which the resource user to be migrated belongs, to the target node; wherein the resource user to be migrated is one or more of the respective resource users, and the target node is one or more of the respective nodes.

In another aspect, an embodiment of the present disclosure further provides a computer device, including: one or more processors; and a storage means having one or more programs stored thereon which, when executed by the one or more processors, cause the one or more processors to perform the resource scheduling method as described above.

In another aspect, an embodiment of the present disclosure further provides a computer-readable medium having a computer program stored thereon which, when executed, causes the resource scheduling method as described above to be implemented.

BRIEF DESCRIPTION OF DRAWINGS

FIG. 1 is a schematic diagram of a system architecture according to an embodiment of the present disclosure;
FIG. 2 is a schematic flowchart of a resource scheduling method according to an embodiment of the present disclosure; and
FIG. 3 is a schematic structural diagram of a confidence measurement apparatus according to an embodiment of the present disclosure.

DETAIL DESCRIPTION OF EMBODIMENTS

Example embodiments will be described more sufficiently below with reference to the accompanying drawings, which, however, may be embodied in different forms and should not be construed as limited to the embodiments set forth herein. Rather, these embodiments are provided so that the present disclosure will be thorough and complete, and will fully convey the scope of the present disclosure to those skilled in the art.

As used herein, the term "and/or" includes any and all combinations of one or more of the associated listed items.

Terms used herein are for the purpose of describing specific embodiments only and are not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of stated features, integers, steps, operations, elements, and/or components, but do not preclude the presence or addition of one or more other features, integers, steps, operations, elements, components, and/or groups thereof.

Embodiments described herein may be described with reference to plan and/or sectional views in idealized representations of the present disclosure. Accordingly, the example illustrations may be modified in accordance with manufacturing techniques and/or tolerances. Therefore, the embodiments are not limited to the embodiments shown in the drawings, but further include modifications of configurations formed based on a manufacturing process. Therefore, the regions illustrated in the figures have schematic properties, and the shapes of the regions shown in the figures illustrate specific shapes of regions of elements, but are not intended to be limitative.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

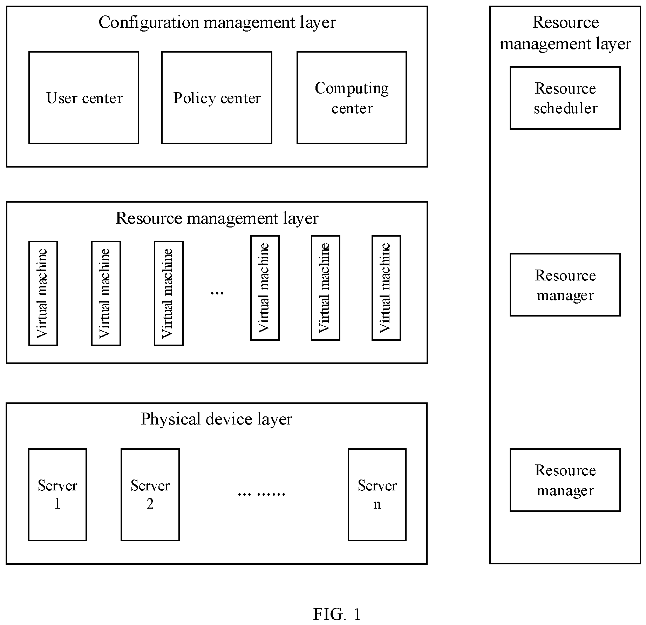

An embodiment of the present disclosure provides a resource scheduling method applied in a system shown in FIG. 1, and the system may be, but is not limited to, a computer cluster. As shown in FIG. 1, the system includes a configuration management layer, a resource management layer, a virtualization layer, and a physical device layer. The configuration management layer includes a user center, a policy center, and a computing center. The virtualization layer is configured to virtualize physical resources to obtain resources that can be dynamically allocated and used, and includes a plurality of virtual machines. The physical device layer is a real entity for providing services, and includes a plurality of servers. The resource management layer is configured to recycle, allocate, manage and schedule resources, includes a resource scheduler and a resource manager, and has the capabilities of user authentication, policy configuration and management, computing and so on. The resource manager may be provided for both the virtualization layer and the physical device layer so as to respectively manage virtualized resources and resources of the physical servers, and each resource scheduler is configured to migrate a resource user among the virtual machines or servers to implement resource scheduling.

With the resource management and scheduling method provided in the embodiments of the present disclosure, resources can be dynamically scheduled in a cloud resource environment, thereby improving the resource utilization rate. The embodiments of the present disclosure may apply the following policies:

1. Resource management and computing policy

Current resource management policies in the existing art involve allocating and using resources under the condition that the resource utilization rate and the demand are satisfied, and releasing resources that are not used, which follows availability and extensive management in the aspect of resource management. By contrast, in the embodiments of the present disclosure, resource domains are classified and divided according to needs, resources of multiple nodes in the resource domains are calculated and planned as a whole, virtual resources obtained by virtualizing the physical resources are scheduled uniformly, and resource management and calculation are performed from multiple dimensions including the node load, resource bearing capacity, network bandwidth, time delay and so on. Each resource user performs resource management and calculation from multiple dimensions including the required resources, resource use conditions and so on, and uses the monitored scheduling period, or operations of the resource user such as logging in, logging out, closing a desktop, adding or deleting resources or the like, as a condition for triggering resource scheduling.

2. Resource scheduling and migration policy

The resources are divided into two categories, i.e., computing resources and storage resources. The computing resources can be dynamically adjusted and changed according to the needs of the resource user, and are independent of specific objects; and the storage resources belong to fixed resources, and are used for storing data information. The resource scheduler monitors, manages, allocates, and operates related information of the physical device resources and the virtualized resources. The configuration management layer makes a response to, according to a configuration policy, resource related requests or operations of a resource user authenticated by the user center. The policy center may set monitoring, detection and thresholds differently according to the requirements of the resource user, and perform real-time multi-dimensional detection, analysis and overall calculation when the resource user are using the resources, to implement real-time dynamic resource management and scheduling.

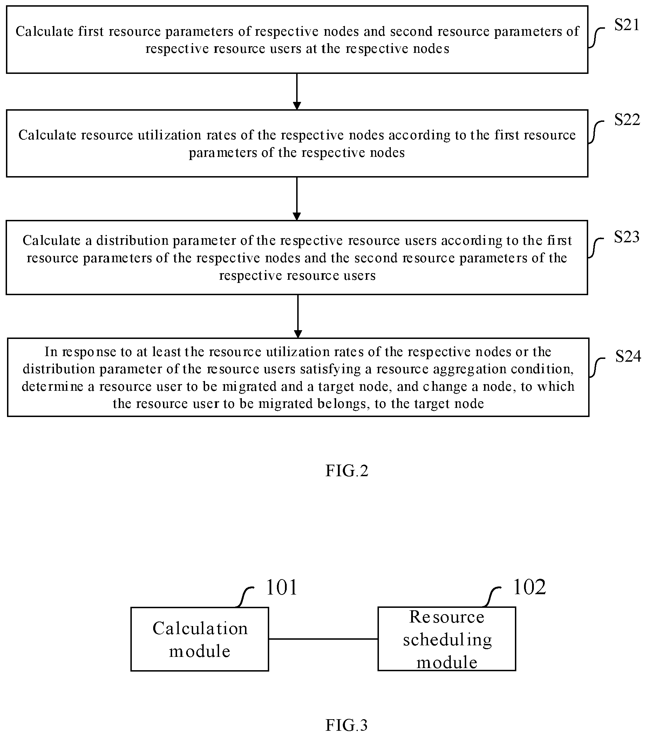

As shown in FIG. 2, an embodiment of the present disclosure provides a resource scheduling method applied to a resource scheduling apparatus, where the resource scheduling apparatus is an apparatus having resource management and scheduling functions in the resource management layer. The resource scheduling method includes the following operations S21 to S24.

At operation S21, calculating first resource parameters of respective nodes and second resource parameters of respective resource users at the respective nodes.

A cluster or resource domain includes a plurality of nodes, each of which is deployed with various resources for use by one or more resource users. In this operation, a cluster or resource domain as a unit, a first resource parameter of each node in the cluster or resource domain is calculated, and a second resource parameter is calculated for each resource user at each node.

At operation S22, calculating resource utilization rates of the respective nodes according to the first resource parameters of the respective nodes.

The first resource parameter may include used resources and total available resources. The used resources of the first resource parameter are represented by a feature vector $C_i$, and the total available resources of the first resource parameter are represented by a feature vector $CS_i$, where i represents a node ID.

In this operation, a resource utilization rate of the first resource parameter for a node may be calculated from the used resources of the first resource parameter and the total available resources of the first resource parameter of

$$\gamma_i = \frac{C_i}{CS_i}$$

the node. The node i has a resource utilization rate of $\gamma_i$, and .

At operation S23, calculating a distribution parameter of the respective resource users according to the first resource parameters of the respective nodes and the second resource parameters of the respective resource users.

The second resource parameter of the resource user may be represented by a feature vector $U_j$, where j represents a resource user ID. In this operation, the distribution parameter of the respective resource users may be calculated according to the used resources of the first resource parameters of the respective nodes and the second resource parameters of the respective resource users, where the distribution parameter reflects a distribution condition of the resource users.

At operation S24, in response to at least the resource utilization rates of the respective nodes or the distribution parameter of the respective resource users satisfying a resource aggregation condition, determining a resource user to be migrated and a target node, and changing a node, to which the resource user to be migrated belongs, to the target node.

The resource user to be migrated is one or more of the respective resource users, and the target node is one or more of the respective nodes. In this operation, it is judged whether the resource utilization rates of the respective nodes and/or the distribution parameter of the respective resource users satisfy the resource aggregation condition, and if the resource aggregation condition is satisfied, a resource user to be migrated from the current node, and a target node used to receive the resource user to be migrated (i.e., a node to which the resource user to be migrated is migrated) are determined, and then, the node to which the resource user to be migrated belongs is changed to the target node, thereby implementing resource scheduling and aggregation among the respective nodes. The resource user to be migrated and the target node may be represented by a set of resource users to be migrated which are migrated to target nodes.

In some embodiments, the distribution parameter of the resource user may be a distribution dispersion rate (or distribution dispersion degree) of the resource users. In judgment of the resource aggregation condition, the judgment may be made solely according to the resource utilization rate of each node and a preset resource utilization rate threshold, or made solely according to the distribution dispersion rate of the resource users and a preset resource user distribution dispersion rate threshold, or made according to a combination of the resource utilization rate of each node, a preset resource utilization rate threshold, the distribution dispersion rate of the resource users, and a preset resource user distribution dispersion rate threshold. It should be noted that a higher resource utilization rate of the node leads to a lower distribution dispersion rate of the resource users, and vice versa.

The embodiment of the present disclosure provides a resource scheduling method, including: calculating first resource parameters of respective nodes and second resource parameters of respective resource users at the respective nodes; calculating resource utilization rates of the respective nodes according to the first resource parameters of the respective nodes; calculating a distribution parameter of the respective resource users according to the first resource parameters of the respective nodes and the second resource parameters of the respective resource users; and in response to at least the resource utilization rates of the respective nodes or the distribution parameter of the respective resource users satisfying a resource aggregation condition, determining a resource user to be migrated and a target node, and changing a node, to which the resource user to be migrated belongs, to the target node. In the embodiment of the present disclosure, resource deployment at the nodes, and demands and use of the resources by the resource users are calculated and analyzed to migrate the resource users among the nodes and thus implement resource aggregation, and resources are scheduled as a whole from the whole cluster perspective at a global level, thereby improving the resource utilization rate of each node, avoiding resource waste at the nodes, and reducing the resource use cost.

In some embodiments, determining the resource user to be migrated and the target node (i.e., operation S24) includes: determining the resource user to be migrated and the target node according to the resource utilization rates of the respective nodes, the distribution parameter of the respective resource users, a preset resource utilization rate threshold and a preset resource user distribution parameter threshold, the first resource parameters of the respective nodes, and the second resource parameters of the respective resource users.

To obtain more precise resource use conditions and resource demands, the first resource parameters of the nodes and/or the second resource parameters of the resource users may be divided into a plurality of types. Therefore, in some embodiments, in the case where the first resource parameters comprise least two types, calculating the first resource parameters of the respective nodes (i.e., operation S21) includes: calculating the first resource parameters of the respective nodes according to the first resource parameters of each type and a corresponding first factor. The first factor represents an importance degree of each type of the first resource parameters. In other words, the first resource parameters of the nodes should be calculated with reference to all types of first resource parameters.

In some embodiments, in the case where the second resource parameters comprise least two types, calculating the second resource parameters of the respective resource users at the respective nodes (i.e., operation S21) includes: calculating the second resource parameters of the respective resource users at the respective nodes according to the second resource parameters of each type and a corresponding second factor. The second factor represents an importance degree of each type of the second resource parameters. In other words, the second resource parameters of the resource users should be calculated with reference to all types of second resource parameters.

In some embodiments, the first factor includes at least one of: a first weight or a first operational relationship.

In some embodiments, the second factor includes at least one of: a second weight or a second operational relationship.

The first and/or second operational relationship may include an algebraic relationship (such as power, radication, logarithm, or the like), or may include an arithmetic relationship such as derivative operation, integral operation, convolution operation, rounding operation, or the like. Taking calculation of the first resource parameter of a node as an example, if the first resource parameter includes different types of first resource parameters, such as a first resource parameter 1 and a first resource parameter 2, and the first factor of the first resource parameter 1 and the first factor of the first resource parameter 2 are both an operational relationship of power, then the first resource parameter of the node can be calculated from a power of the first resource parameter 1 and a power of the first resource parameter 2. Exemplarily, first resource parameter of the node = (first resource parameter 1)$^n$ + (first resource parameter 2)$^n$. If the first factor of the first resource parameter 1 and the first factor of the first resource parameter 2 are both a first weight, the first resource parameter 1 corresponds to a first weight W1, and the first resource parameter 2 corresponds to a first weight W2, then exemplarily, first resource parameter of the node = (first resource parameter 1)*W1 + (first resource parameter 2)*W2.

In some embodiments, the types of the first resource parameters may include: load, resource bearing capacity, network bandwidth, and time delay. In calculation of the first resource parameters of the nodes, at least two of the above types of first resource parameters are used.

In the embodiments of the present disclosure, the load generally refers to a resource use condition; the resource bearing capacity generally refers to total available resources, and may include, for example: a disk space size for measuring a bearing capacity of a disk, an I/O read-write rate, and a CPU clock speed and the number of cores for measuring a computing capacity of the CPU. It should be noted that the types of the first resource parameters are not limited to those listed above, and may be selected and determined according to the actual service scenario. For example, for video on-demand cloud resources, only the disk size, the I/O read-write rate, and the network bandwidth may be of interest, and therefore, two types of first resource parameters, i.e., the disk bearing capacity and the network bandwidth, may be selected.

In some embodiments, the types of the second resource parameters of the respective resource users may include: resource usage duration, resource usage frequency, bandwidth requirements of a data transmission network, resource requirement type, and resource utilization rate. In calculation of the second resource parameters of the resource users, at least two of the above types of second resource parameters are used.

In some embodiments, the respective nodes belong to a same and single resource domain, and calculating the first resource parameters of the respective nodes and the second resource parameters of the respective resource users at the respective nodes (i.e., operation S21) includes: calculating first resource parameters of respective nodes and second resource parameters of respective resource users at the respective nodes in the resource domain. In other words, in the case that there is only one resource domain, all nodes belong to the same resource domain, and the first resource parameters of all nodes and the second resource parameters of the resource users thereof in the whole resource domain are calculated. Accordingly, the calculated distribution parameter of the respective resource users also reflects a distribution condition of the resource users at respective nodes in the resource domain, and the resource user to be migrated is migrated among the nodes in the resource domain, to implement resource scheduling within the resource domain.

To further improve the resource utilization rate and the convenience in resource use, nodes providing the same type of resources may be divided into the same resource domain. It should be noted that, in the embodiments of the present disclosure, the types of resources may include, but are not limited to, computing resources, graphics resources, and so on.

Accordingly, in some embodiments, the respective nodes each belong to one or more of a plurality of resource domains divided according to types of resources, respective nodes in the same resource domain are deployed with the same type of resources, and calculating the first resource parameters of the respective nodes and the second resource parameters of the respective resource users at the respective nodes (i.e., operation S21) includes: calculating first resource parameters of respective nodes and second resource parameters of respective resource users at the respective nodes in the same resource domain.

In other words, in the case of a plurality of resource domains, different nodes may belong to different resource domains, or different types of resources may be deployed in the same node, so that the same node may belong to different resource domains. In either case, the first resource parameters of the nodes and the second resource parameters of the resource users are calculated in units of resource domains. Accordingly, the calculated distribution parameter of resource users also reflects a distribution condition of the resource users at the respective nodes in the same resource domain, and the resource user to be migrated is migrated among the nodes in the same resource domain, to implement resource scheduling within the same resource domain.

In the case of multiple types of first resource parameters and multiple types of second resource parameters, the used resources of the first resource parameter $C_i$ of the node may be represented as:

$$c_i = \left( r_{i1}^c w_{i1}, r_{i2}^c w_{i2}, r_{i3}^c w_{i3}, ...., r_{in}^c w_{in} \right)$$

where i represents the node ID, n represents the number of types of the first c resource parameters, $r_{in}^c$ represents the used resources in the $n^{th}$ type of first resource parameters at node i, and $w_{in}$ represents the weight of the $n^{th}$ type of first resource parameters at the node i.

The total available resources $CS_i$ of the first resource parameter of the node may be expressed as:

$$cs_i = \left( s_{i1}^c, s_{i2}^c, s_{i3}^c, ...., s_{in}^c \right)$$

where $S_{in}^c$ represents the total available resources in the $n^{th}$ type of first resource parameters at the node i.

The second resource parameter $U_j$ of the resource user may be expressed as:

6

$$U_j = (r_{j1}^u w_{j1}, r_{j2}^u w_{j2}, r_{j3}^u w_{j3}, \ldots, r_{jm}^u w_{jm})$$

where j represents the resource user ID, m represents the number of types of the second resource parameters, $r_{jm}^u$ represents resources in the m$^{th}$ type of second resource parameters of the resource user j, and $w_{jm}$ represents the weight in the m$^{th}$ type of second resource parameters of the resource user j.

$$\gamma_d = \frac{\sum_{i=1}^{n} C_i}{\sum_{i=1}^{n} CS_i}$$

The resource utilization rate $\gamma_d$ of a certain resource domain d may be calculated by:

In the resource domain d, the distribution dispersion rate of the resource users may be expressed as $y_d$, and exemplarily, $y_d$ may be calculated by:

$$y_d = \sigma(C_i, U_j) = \{\sum_{k=1}^{n,m} (C_{ik}, U_j)(C_i, U_{jk})\}$$

where $(C_{ik}, U_j)$ represents the resource use conditions of a resource user j at the respective nodes, and $(C_i, U_{jk})$ represents the resource use conditions of the respective resource users at node i.

For a certain resource domain d, the set of resource users to be migrated which are migrated to target nodes may represented by $a_d$, and exemplarily, $a_d$ may be calculated by:

$$a_d = (\sum_i (U_1^{C_i}, \ldots, \quad U_x^{C_i}), \ldots, \sum_j (U_1^{C_j}, \ldots, \quad U_y^{C_j}))$$

$$= \arg\max\{\int_{\gamma_{dt}}^{\gamma_d} \sum_{i \in l} C_l, \int_{y_{dt}}^{y_d} \sum_{i \in 1} (C_1, \sum_{j=1}^{m} U_j^C)\}$$

where $\gamma_{dt}$ represents the resource utilization rate threshold, $y_{dt}$ represents the resource user distribution dispersion rate threshold, x is the number of resource users migrated to a target node i, y is the number of resource users migrated to a target node j, and l represents a set of target nodes which can be determined according to the resource utilization rate of each node.

It should be noted that in the resource domain d, the distribution dispersion rate of the resource users $y_d$ and the set $a_d$ of resource users to be migrated which are migrated to target nodes include, but are not limited to, the above equations, and any solution capable of determining the distribution discrete rate, the resource users to be migrated and the target node is within the scope of the present disclosure.

In the embodiments of the present disclosure, a triggering condition for calculating the first resource parameters of the respective nodes and the second resource parameters of the respective resource users at the respective nodes may include: periodically triggering (i.e., reaching a preset trigger time), or event triggering (i.e., occurrence of a trigger event).

Accordingly, in some embodiments, calculating the first resource parameters of the respective nodes and the second resource parameters of the respective resource users at the respective nodes (i.e., operation S21) includes:

calculating first resource parameters of respective nodes and second resource parameters of respective resource users at the respective nodes according to a preset period, where the preset period may be delivered and configured by the policy center; or,
calculating first resource parameters of respective nodes and second resource parameters of respective resource users at the respective nodes in a case where at least one of the following conditions is satisfied:

a resource user executes on a resource scheduling apparatus at least one of: logging in, logging out, or closing a desktop;

a resource user initiates a resource addition request or a resource deletion request; or
at least one of the nodes fails and/or hardware of at least one of the nodes fails.

In a scenario of a cloud video resource on demand, a video on demand cloud resource server receives event-triggered resource scheduling from a third-party gateway or other devices, and correspondingly, if no user requests a certain video content within a preset time (e.g., 24 continuous hours), the first resource parameters of respective nodes and the second resource parameters of respective resource users at the respective nodes are calculated to trigger video resource scheduling. It should be noted that the above trigger event is only exemplary, and may be defined according to the actual service scenario.

With the resource scheduling method provided in the embodiments of the present disclosure, cloud resources can be uniformly managed and planned, resource applications of the resource users can be reasonably allocated and scheduled, and unified management of resource release can be implemented. Dynamic management of the resources is performed according to a set policy, and dynamic management, scheduling and allocation of the resources are implemented through real-time automatic monitoring, calculation, migration, aggregation, resource recovery and release, thereby achieving maximum resource utilization.

By classifying the resources, demands of the resource users are divided into one or more resource domains through policy setting. Then, the resource domain is taken as a unit management and scheduling body for multi-dimensional calculation on the resources of the nodes and the resource users in the resource domain, and unified data analysis, processing and overall planning are performed within the resource domain, to determine a target node to receive aggregation migration and resource users to be aggregated and migrated, thereby completing the aggregation and migration of resources, and improving the utilization rate of the node resources which are otherwise used at the nodes and by the resource users discretely and irregularly through migration and aggregation.

Based on the same technical concept, an embodiment of the present disclosure further provides a resource scheduling apparatus which, as shown in FIG. 3, includes a calculation module 101 and a resource scheduling module 102. The calculation module 101 is configured to calculate first resource parameters of respective nodes and second resource parameters of respective resource users at the respective nodes; calculate resource utilization rates of the respective nodes according to the first resource parameters of the respective nodes; and calculate a distribution parameter of the respective resource users according to the first resource parameters of the respective nodes and the second resource parameters of the respective resource users.

The resource scheduling module 102 is configured to, in response to at least the resource utilization rates of the respective nodes or the distribution parameter of the respective resource users satisfying a resource aggregation condition, determine a resource user to be migrated and a target node, and change a node, to which the resource user to be migrated belongs, to the target node. The resource user to be migrated is one or more of the respective resource users, and the target node is one or more of the respective nodes.

In some embodiments, the resource scheduling module 102 is configured to determine the resource user to be migrated and the target node according to the resource utilization rates of the respective nodes, the distribution parameter of the respective resource users, a preset resource utilization rate threshold and a preset resource user distribution parameter threshold, the first resource parameters of the respective nodes, and the second resource parameters of the respective resource users.

In some embodiments, the first resource parameters comprise least two types, and the calculation module 101 is configured to calculate first resource parameters of respective nodes according to the first resource parameters of each type and a corresponding first factor that represents an importance degree of each type of the first resource parameters; and/or
the second resource parameters comprise least two types, and the calculation module 101 is configured to calculate second resource parameters of respective resource users at the respective nodes according to the second resource parameters of each type and a corresponding second factor that represents an importance degree of each type of the second resource parameters.

In some embodiments, the first factor includes at least one of: a first weight or a first operational relationship; and/or
the second factor includes at least one of: a second weight or a second operational relationship.

In some embodiments, the types of the first resource parameters include: load, resource bearing capacity, network bandwidth, and time delay; and/or the types of the second resource parameters of the respective resource users include: resource usage duration, resource usage frequency, bandwidth requirements of a data transmission network, resource requirement type, and resource utilization rate.

In some embodiments, the respective nodes belong to a same and single resource domain, and the calculation module 101 is configured to calculate first resource parameters of respective nodes and second resource parameters of respective resource users at the respective nodes in the resource domain.

In some embodiments, the respective nodes each belong to one or more of a plurality of resource domains divided according to types of resources, respective nodes in the same resource domain are deployed with the same type of resources, and the calculation module 101 is configured to calculate first resource parameters of respective nodes and second resource parameters of respective resource users at the respective nodes in the same resource domain.

In some embodiments, the calculation module 101 is configured to calculate first resource parameters of respective nodes and second resource parameters of respective resource users at the respective nodes according to a preset period; or, calculate first resource parameters of respective nodes and second resource parameters of respective resource users at the respective nodes when at least one of the following conditions is satisfied: a resource user executes on a resource scheduling apparatus at least one of: logging in, logging out, or closing a desktop; a resource user initiates a resource addition request or a resource deletion request; or at least one of the nodes fails and/or hardware of at least one of the nodes fails.

An embodiment of the present disclosure further provides a computer device, including: one or more processors and a storage means. The storage means stores one or more programs thereon which, when executed by the one or more processors, cause the one or more processors to perform the resource scheduling method described in any of the above embodiments.

An embodiment of the present disclosure further provides a computer-readable medium having a computer program stored thereon which, when executed, causes the resource scheduling method described in any of the above embodiments to be implemented.

Those of ordinary skill in the art will appreciate that all or some operations of the above described method, functional modules/units in the apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). The term computer storage medium includes volatile and nonvolatile, removable and non-removable media implemented in any method or technology for storage of information such as computer-readable instructions, data structures, program modules or other data, as is well known to those of ordinary skill in the art. The computer storage medium includes, but is not limited to, an RAM, an ROM, an EEPROM, a flash or any other memory technology, a CD-ROM, a digital versatile disc (DVD) or any other optical disc storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A resource scheduling method, comprising:

   calculating first resource parameters of respective nodes and second resource parameters of respective resource users at the respective nodes;
   calculating resource utilization rates of the respective nodes according to the first resource parameters of the respective nodes;
   calculating a distribution parameter of the respective resource users according to the first resource parameters of the respective nodes and the second resource parameters of the respective resource users; and
   in response to at least the resource utilization rates of the respective nodes or the distribution parameter of the respective resource users satisfying a resource aggregation condition, determining a resource user to be migrated and a target node, and changing a node, to which the resource user to be migrated belongs, to the target node; wherein the resource user to be migrated is one or more of the respective resource users, and the target node is one or more of the respective nodes.

2. The method according to claim 1, wherein determining the resource user to be migrated and the target node comprises:
   determining the resource user to be migrated and the target node according to the resource utilization rates of the respective nodes, the distribution parameter of the respective resource users, a preset resource utilization rate threshold and a preset resource user distribution parameter threshold, the first resource parameters of the respective nodes, and the second resource parameters of the respective resource users.

3. The method according to claim 1, wherein the first resource parameters comprise least two types, and calculating the first resource parameters of the respective nodes comprises: calculating the first resource parameters of the respective nodes according to the first resource parameters of each type and a corresponding first factor that represents an importance degree of each type of the first resource parameters; and/or
   the second resource parameters comprise least two types, and calculating the second resource parameters of the respective resource users at the respective nodes comprises: calculating the second resource parameters of the respective resource users at the respective nodes according to the second resource parameters of each type and a corresponding second factor that represents an importance degree of each type of the second resource parameters.

4. The method according to claim 3, wherein

   the first factor comprises at least one of: a first weight or a first operational relationship; and/or
   the second factor comprises at least one of: a second weight or a second operational relationship.

5. The method according to claim 3, wherein the types of the first resource parameters comprise: load, resource bearing capacity, network bandwidth, and time delay; and/or
   the types of the second resource parameters of the respective resource users comprise: resource usage duration, resource usage frequency, bandwidth requirements of a data transmission network, resource requirement type, and resource utilization rate.

6. The method according to claim 1, wherein the respective nodes belong to a same and single resource domain, and calculating the first resource parameters of the respective nodes and the second resource parameters of the respective resource users at the respective nodes comprises:
   calculating first resource parameters of respective nodes and second resource parameters of respective resource users at the respective nodes in the resource domain.

7. The method according to claim 1, wherein the respective nodes each belong to one or more of a plurality of resource domains divided according to types of resources, respective nodes in the same resource domain are deployed with the same type of resources, and calculating the first resource parameters of the respective nodes and the second resource parameters of the respective resource users at the respective nodes comprises:
   calculating first resource parameters of respective nodes and second resource parameters of respective resource users at the respective nodes in the same resource domain.

8. The method according to any one of claims 1 to 7, wherein calculating the first resource parameters of the respective nodes and the second resource parameters of the respective resource users at the respective nodes comprises:

   calculating first resource parameters of respective nodes and second resource parameters of respective resource users at the respective nodes according to a preset period; or,
   calculating first resource parameters of respective nodes and second resource parameters of respective resource users at the respective nodes in a case where at least one of the following conditions is satisfied:

   a resource user executes on a resource scheduling apparatus at least one of: logging in, logging out, or closing a desktop;
   a resource user initiates a resource addition request or a resource deletion request; or
   at least one of the nodes fails and/or hardware of at least one of the nodes fails.

9. A resource scheduling apparatus, comprising: a calculation module and a resource scheduling module, wherein

the calculation module is configured to calculate first resource parameters of respective nodes and second resource parameters of respective resource users at the respective nodes; calculate resource utilization rates of the respective nodes according to the first resource parameters of the respective nodes; and calculate a distribution parameter of the respective resource users according to the first resource parameters of the respective nodes and the second resource parameters of the respective resource users; and

the resource scheduling module is configured to, in response to at least the resource utilization rates of the respective nodes or the distribution parameter of the respective resource users satisfying a resource aggregation condition, determine a resource user to be migrated and a target node, and change a node, to which the resource user to be migrated belongs, to the target node; wherein the resource user to be migrated is one or more of the respective resource users, and the target node is one or more of the respective nodes.

10. The resource scheduling apparatus according to claim 9, wherein the resource scheduling module is further configured to: determine the resource user to be migrated and the target node according to the resource utilization rates of the respective nodes, the distribution parameter of the respective resource users, a preset resource utilization rate threshold and a preset resource user distribution parameter threshold, the first resource parameters of the respective nodes, and the second resource parameters of the respective resource users.

11. The resource scheduling apparatus according to claim 9, wherein the first resource parameters comprise least two types, and the calculation module is further configured to: calculate the first resource parameters of the respective nodes according to the first resource parameters of each type and a corresponding first factor that represents an importance degree of each type of the first resource parameters.

12. The resource scheduling apparatus according to claim 9 or 11, wherein the second resource parameters comprise least two types, and the calculation module is further configured to calculate the second resource parameters of the respective resource users at the respective nodes according to the second resource parameters of each type and a corresponding second factor that represents an importance degree of each type of the second resource parameter.

13. The resource scheduling apparatus according to claim 9, wherein the calculation module is configured to calculate first resource parameters of respective nodes and second resource parameters of respective resource users at the respective nodes according to a preset period.

14. The resource scheduling apparatus according to claim 9, wherein the calculation module is configured to calculate first resource parameters of respective nodes and second resource parameters of respective resource users at the respective nodes in a case where at least one of the following conditions is satisfied:

a resource user executes on a resource scheduling apparatus at least one of: logging in, logging out, or closing a desktop;
a resource user initiates a resource addition request or a resource deletion request; or
at least one of the nodes fails and/or hardware of at least one of the nodes fails.

15. A computer device, comprising:

one or more processors; and
a storage means having one or more programs stored thereon which,
when executed by the one or more processors, cause the one or more processors to implement the resource scheduling method according to any one of claims 1 to 8.

16. A computer-readable medium storing a computer program thereon which, when executed, causes the resource scheduling method according to any one of claims 1 to 8 to be implemented.

Configuration management layer

| User center | Policy center | Computing center |

Resource management layer

Virtual machine | Virtual machine | Virtual machine | ... | Virtual machine | Virtual machine | Virtual machine

Physical device layer

| Server 1 | Server 2 | ... ...... | Server n |

Resource management layer

Resource scheduler

Resource manager

Resource manager

FIG. 1

Calculate first resource parameters of respective nodes and second resource parameters of respective resource users at the respective nodes ⌒ S21

Calculate resource utilization rates of the respective nodes according to the first resource parameters of the respective nodes ⌒ S22

Calculate a distribution parameter of the respective resource users according to the first resource parameters of the respective nodes and the second resource parameters of the respective resource users ⌒ S23

In response to at least the resource utilization rates of the respective nodes or the distribution parameter of the resource users satisfying a resource aggregation condition, determine a resource user to be migrated and a target node, and change a node, to which the resource user to be migrated belongs, to the target node ⌒ S24

FIG.2

⌒ 101

Calculation module

⌒ 102

Resource scheduling module

FIG.3

## INTERNATIONAL SEARCH REPORT

International application No.

**PCT/CN2022/117806**

### A. CLASSIFICATION OF SUBJECT MATTER

G06F 9/50(2006.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 资源调度, 节点, 参数, 使用者, 使用率, 分布, 聚合, 迁移, 目标节点, resource scheduling, node, parameters, user, utilization rate, distribution, aggregation, migrate, target node

### C. DOCUMENTS CONSIDERED TO BE RELEVANT

| Category* | Citation of document, with indication, where appropriate, of the relevant passages | Relevant to claim No. |
|---|---|---|
| A | WO 2020207264 A1 (ALIBABA GROUP HOLDING LIMITED) 15 October 2020 (2020-10-15) <br> description, page 8, line 27 to page 10, line 18, and page 13, line 14 to page 14, line 29 | 1-16 |
| A | CN 108009016 A (HUAWEI TECHNOLOGIES CO., LTD.) 08 May 2018 (2018-05-08) <br> entire document | 1-16 |
| A | CN 110851236 A (TRANSWARP TECHNOLOGY (SHANGHAI) CO., LTD.) 28 February 2020 (2020-02-28) <br> entire document | 1-16 |
| A | CN 111813502 A (CHONGQING UNIVERSITY OF POSTS AND TELECOMMUNICATIONS) 23 October 2020 (2020-10-23) <br> entire document | 1-16 |
| A | US 6047323 A (HEWLETT-PACKARD COMPANY) 04 April 2000 (2000-04-04) <br> entire document | 1-16 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **25 November 2022** | **05 December 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/117806**

| Patent document cited in search report | | | Publication date (day/month/year) | Patent family member(s) | | | Publication date (day/month/year) |
|---|---|---|---|---|---|---|---|
| WO | 2020207264 | A1 | 15 October 2020 | CN | 111800283 | A | 20 October 2020 |
| CN | 108009016 | A | 08 May 2018 | US | 2019253490 | A1 | 15 August 2019 |
| | | | | EP | 3525096 | A1 | 14 August 2019 |
| | | | | WO | 2018076791 | A1 | 03 May 2018 |
| CN | 110851236 | A | 28 February 2020 | WO | 2021093783 | A1 | 20 May 2021 |
| CN | 111813502 | A | 23 October 2020 | None | | | |
| US | 6047323 | A | 04 April 2000 | JPH | 10105522 | A | 24 April 1998 |

Form PCT/ISA/210 (patent family annex) (January 2015)